# EUROPEAN PATENT SPECIFICATION

(11) **EP 2 754 728 B1**
(45) Date of publication and mention of the grant of the patent: **04.04.2018**
(21) Application number: 14151033.9
(22) Date of filing: 14.01.2014
(51) Int. Cl.: C23C 8/34, C23C 8/02, C23C 8/80, C21D 1/06, F16D 27/115

(54) **Production methods of sliding member and clutch plate**
Herstellungsverfahren für Gleitelement und Kupplungsscheibe
Procédés de production d' élément coulissant et disque d'embrayage

(30) Priority: 15.01.2013 JP 2013004643
(43) Date of publication of application: 16.07.2014
(73) Proprietor: JTEKT Corporation, Osaka-shi Osaka 542-8502 (JP)
(72) Inventor: Ando, Hiroyuki, Osaka-shi,, Osaka 542-8502 (JP); Ando, Junji, Osaka-shi,, Osaka 542-8502 (JP); Tsuda, Takuya, Osaka-shi,, Osaka 542-8502 (JP); Takahashi, Shuichi, Osaka-shi,, Osaka 542-8502 (JP); Hattori, Kiyoyuki, Osaka-shi,, Osaka 542-8502 (JP); Fukushima, Kazuhiro, Kariya-shi,, Aichi 448-0803 (JP); Nanba, Tomoyuki, Kariya-shi,, Aichi 448-0803 (JP); Shirayanagi, Hiroshi, Kariya-shi,, Aichi 448-0803 (JP)
(74) Representative: TBK

(56) References cited:
- EP-A2- 0 217 421
- JP-A- H11 287 258
- JP-A- 2006 138 485
- US-A- 6 158 561
- US-A1- 2012 048 427
- Thorsten Holm: "Furnace Atmospheres No. 3, Gas Nitriding and Nitrocarburising", , 10 November 2009 (2009-11-10), pages 1-47, XP055118421, Retrieved from the Internet: URL:http://heattreatment.linde.com/interna tional/web/lg/ht/like35lght.nsf/repository byalias/wp_ntrdg_3/$file/3.pdf [retrieved on 2014-05-16]

## Description

### BACKGROUND OF THE INVENTION

### 1. Field of the Invention

The present invention relates to a method of producing a sliding member and a clutch plate.

### 2. Description of Related Art

Japanese Patent Application Publication No. 11-287258 (JP 11-287258 A) and Japanese Patent Application Publication No. 2006-138485 (JP 2006-138485 A) describe that a NITROTEC (registered trademark) method is used to produce a clutch plate of an electromagnetic clutch device. The NITROTEC method is carried out by performing gas soft-nitriding treatment of heating an iron base material in a nitrogen atmosphere of 500°C to 700°C for one to two hours, then performing oxidation treatment in an oxygen atmosphere at a high temperature for a short time, and performing rapid cooling in a water-oil emulsion. Accordingly, each of a nitrogen compound layer and a nitrogen diffusion layer is formed to have a thickness of about 20 mm to 40 mm, and an oxide film is formed to have a thickness of 0.5 mm to 1.5 mm.

The surface of a sliding member such as a clutch plate needs to have high degree of flatness. However, according to the above-described production method, since rapid cooling is performed in the water-oil emulsion, the cooling rate is high and thus the material may be deformed. In addition, since the cooling liquid contains water, rust may be formed on the surface.

On the other hand, it has been found that when a clutch plate produced according to the NITROTEC method is used for a long time, a rate of change in transmission torque before and after the clutch plate is used for a long time is reduced to be small. This is because surface roughness of the clutch plate is reduced to be small and thus a contact area between the clutch plates does not greatly vary even when the surfaces are abraded.

US 2012/048427 A1 discloses a steel for nitrocarburizing which includes, by mass %, C: 0% to less than 0.15%; Si: 0.01% to 1.00%; Mn: 0.01% to 1.00%; S: 0.0001% to 0.050%; Al: 0.0001% to 0.050%; Ti: more than 0.50% to 1.50%; N: 0.0005% to 0.0100%; and the balance consisting of Fe and inevitable impurities, in which P is limited to 0.050% or less; O is limited to 0.0060% or less; and the amount of Ti [Ti %], the amount of C [C %], the amount of N [N %], and the amount of S [S %] satisfy 0.48<[Ti %]-47.9x([C %]/12+[N %]/14+[S %]/32) ≤1.20.

EP 0 217 421 A2 discloses the following. Namely, to impart good salt spray corrosion resistance to alloy steel components, such components are gas nitrocarburised at 550°C to 800°C to produce an epsilon layer oxidised to produce an Fe₃O₄ layer not more than 1 micrometre thick, quenched into an oil/water emulsion, degreased and then wax coated. The steel components may be surface finished after nitrocarburising. A carburizing or carbonitriding or neutral atmosphere heat treatment is effected prior to nitrocarburising heat treatment heat treatment with both heat treatments being effected at above the pearlite to austenite transformation temperature.

In addition to the above, reference is made to the scientific article of Thorsten Holm "Furnace atmospheres No. 3, Gas Nitriding and Nitrocarburising" dated November 10, 2009.

### SUMMARY OF THE INVENTION

The present invention provides a method of producing a sliding member and a clutch plate, which makes it possible to reduce deformation of a material due to cooling, prevent rust from being formed on the surface of the material, and reduce a change in surface roughness in a case of long-term use.

The inventors of the present invention have actively studied to solve the above-described problems and have made the present invention by increasing a temperature difference before and after cooling without using water as a cooling liquid in a manner such that a nitriding temperature is not raised to an excessively high temperature. The present invention relates to production methods of a sliding member and of a clutch plate of an electromagnetic clutch as an aspect of the sliding member.

A sliding member thereof includes: a base material portion that is formed of steel; a nitrogen diffusion layer that is formed to have a thickness of 10 mm to 50 mm on a surface side of the base material portion; and a nitrogen compound layer that is formed to have a thickness of 10 mm to 50 mm on a surface side of the nitrogen diffusion layer, and that constitutes an outermost surface. The nitrogen compound layer and the nitrogen diffusion layer are formed by performing a first heating process of performing heat treatment on a material formed of steel in an ammonia atmosphere at a temperature of 570°C to 660°C, a second heating process of performing heat treatment on the material in a non-oxidizing and non-ammonia atmosphere at a temperature of 660°C to 690°C subsequently to the first heating process, the temperature in the second heating process being higher than the temperature in the first heating process, and an oil cooling process of performing oil cooling treatment at an oil temperature of 60°C to 80°C subsequently to the second heating process.

The present invention relates to a method of producing a sliding member according to claim 1, including a base material portion that is formed of steel, a nitrogen
diffusion layer that is formed to have a thickness of 10 µm to 50 µm on a surface side of the base material portion, and a nitrogen compound layer that is formed to have a thickness of 10 µm to 50 µm on a surface side of the nitrogen diffusion layer, and that constitutes an outermost surface. In the method, the nitrogen compound layer and the nitrogen diffusion layer are formed by performing: a first heating process of performing heat treatment on a material formed of steel in an ammonia atmosphere at a temperature of 570°C to 660°C; a second heating process of performing heat treatment on the material in a non-oxidizing and non-ammonia atmosphere at a temperature of 660°C to 690°C subsequently to the first heating process, the temperature in the second heating process being higher than the temperature in the first heating process; and an oil cooling process of performing oil cooling treatment at an oil temperature of 60°C to 80°C subsequently to the second heating process.

According to the present invention, since the cooling after the heating process is performed by oil cooling, oil is used as a cooling liquid and water is not used as the cooling liquid. Accordingly, it is possible to suppress formation of rust on the surface of the sliding member. Due to the nature of the oil, the oil used for the oil cooling is lower in a cooling rate than water used for water cooling. By employing the oil cooling, the temperature can be set to be higher than that in the case where the cooling liquid including water is used. Accordingly, the cooling rate in the oil cooling can be made lower than the cooling rate in the case where the cooling liquid including water is used. As a result, an amount of change in distortion (flatness) of the surface of the sliding member before heating and after cooling can be reduced.

In the first heating process, heat treatment is performed in the ammonia atmosphere. That is, the material is nitrided in the first heating process. The temperature in the first heating process is 570°C to 660°C. By heating the material at 570°C or higher, it is possible to ensure that each of the nitrogen compound layer and the nitrogen diffusion layer has the thickness of 10 µm to 50 µm.

By nitriding the material at the above-described temperature, it is possible to reduce the surface roughness of the sliding member after the heat treatment as compared to a case where the material is nitrided at a temperature higher than 660°C. By reducing the surface roughness of the sliding member after the heat treatment, it is possible to reduce the final surface roughness of the sliding member after the cooling. Therefore, it is possible to reduce an amount of change in the surface roughness after the sliding member is used for a long time.

In the case where a first heating temperature at which the heat treatment is performed for nitriding is set to 570°C to 660°C and the oil cooling is performed from the temperature, since the oil cooling temperature ranges from 60°C to 80°C which is higher than the water cooling temperature as described above, the cooling temperature difference decreases. Therefore, subsequently to the first heating process for nitriding, the atmosphere temperature is raised to 660°C to 690°C and then the oil cooling is performed. That is, the oil cooling is performed with a start temperature being set to 660°C to 690°C, whereby it is possible to secure a sufficient temperature difference.

Accordingly, even when the oil temperature in the oil cooling process is set to 60°C or higher, it is possible to ensure that each of the nitrogen compound layer and the nitrogen diffusion layer has the thickness of 10 µm to 50 µm, by setting the atmosphere temperature in the second heating process immediately before the oil cooling process, to 660°C or higher which is sufficiently higher than 590°C which is an A1 transformation point of Fe-N.

By setting the atmosphere temperature in the second heating process to 660°C or higher and setting the oil temperature to 80°C or lower, it is possible to ensure that each of the nitrogen compound layer and the nitrogen diffusion layer has the thickness of 10 µm to 50 µm. Therefore, it is possible to increase the hardness in the surface side. As a result, it is possible to improve abrasion resistance. By forming the nitrogen compound layer and the nitrogen diffusion layer each having the thicknesses of 10 µm or more, it is possible to secure the sufficient hardness in the surface side of the sliding member and to reduce the variation in hardness in the surface side even when the surface is abraded.

By setting the oil temperature in the oil cooling process to 60°C or higher, it is possible to sufficiently reduce deformation of a material which is a problem in the related art. By setting the atmosphere temperature in the second heating process to 690°C or lower, it is possible to reduce diffusion (loss) of the nitrogen compound layer and to secure high hardness.

The temperature of the atmosphere in the first heating process may be equal to or higher than 590°C. The oil cooling process may be performed in a non-oxidizing atmosphere. The nitrogen compound layer and the nitrogen diffusion layer are formed by further performing a tempering process of performing tempering treatment at a temperature of 250°C to 400°C while pressurizing a surface side of the material, subsequently to the oil cooling process.

By setting the atmosphere temperature in the first heating process, that is, the atmosphere temperature when nitriding is performed, to a temperature equal to or higher than 590°C which is the A1 transformation point of Fe-N, it is possible to ensure that each of the nitrogen compound layer and the nitrogen diffusion layer has the thickness of 10 µm to 50 µm.

In the oil cooling process, the oil cooling is performed in a non-oxidizing atmosphere. That is, oxidation treatment is not actively performed after the heating process, unlike the NITROTEC method. That is, an oxide film is not likely to be formed on the surface of the sliding member. Accordingly, it is possible to increase the surface flatness. By performing tempering treatment while pressurizing the surface side of the sliding member (the material) after the oil cooling process, it is possible to remove internal distortion and to further increase the flatness.

The heat treatment time in the second heating process may be set to be shorter than a heat treatment time at the temperature of 570°C to 660°C in the first heating process. The ammonia atmosphere may be maintained while temperature raising is performed from the temperature at which the heat treatment is performed in the first heating process to the temperature at which the heat treatment is performed in the second heating process. The ammonia atmosphere may be created at an atmosphere temperature of 500°C to 550°C immediately before the first heating process, and then temperature raising may be performed from the atmosphere temperature of 500°C to 550°C to the temperature at which the heat treatment is performed in the first heating process.

In the second heating process, as the heat treatment time at the temperature of 660°C to 690°C increases, the diffusion (loss) of the nitrogen compound layer increases. Therefore, by shortening the treatment time at the above-described temperature in the second heating process, it is possible to reduce the diffusion of the nitrogen compound layer and to secure the hardness. On the other hand, since the first heating process is a process of performing nitriding treatment, it is necessary to secure the sufficient heat treatment time at 570°C to 660°C. Therefore, by setting the heat treatment times so that the heat treatment time at 660°C to 690°C in the second heating process is shorter than the heat treatment time at 570°C to 660°C in the first heating process, it is possible to satisfy all the above-described requirements.

By performing the heat treatment in the ammonia atmosphere until the atmosphere temperature is raised to the atmosphere temperature in the second heating process from the atmosphere temperature in the first heating process, it is possible to secure the sufficient thicknesses of the nitrogen compound layer and the nitrogen diffusion layer and to reduce the surface roughness.

By starting to create the ammonia atmosphere at an atmosphere temperature of 550°C or lower, it is possible to reduce nitriding unevenness, that is, nitriding irregularity. In general, as the atmosphere temperature is lower, the nitriding efficiency is lower, and as the atmosphere temperature is higher, the nitriding efficiency is higher. That is, by starting to create the ammonia atmosphere in a state where the nitriding efficiency is low, it is possible to change the entire atmosphere to the ammonia atmosphere when the atmosphere temperature reaches a temperature at which the nitriding efficiency is high. As a result, it is possible to reduce the nitriding unevenness. When the ammonia atmosphere starts to be created at an atmosphere temperature lower than 500°C, the nitriding unevenness occurs. Therefore, by setting a start temperature, at which supply of ammonia gas is started, to 500°C or higher, it is possible to reduce the nitriding unevenness.

Oxidation treatment may be performed in an oxidizing atmosphere at a temperature of 300°C to 450°C, before the first heating process is performed. Hot pressing treatment may be performed before the oxidation treatment is performed, and in the hot pressing treatment, a pressurizing force of 5 N or more may be applied to the material at a temperature of 600°C to 700°C.

By performing the oxidation treatment before the first heating process, the material is easily nitrided. Through the use of the hot pressing treatment, it is possible to reduce distortion of the material and to remove residual stress in the material.

The invention further relates to a method of producing a clutch plate constituting an electromagnetic clutch, the method including the method of producing a sliding member according to the above-described method.

With the clutch plate manufactured according to claim 9, it is possible to obtain the above-described advantageous effects of the sliding member. Each of the thicknesses of the nitrogen compound layer and the nitrogen diffusion layer is set to 50 µm or smaller. If each of the thicknesses is greater than 50 µm, magnetic permeability is lowered. Accordingly, a magnetic flux density of the clutch plate is lowered and thus a frictional engaging force between the clutch plates is lowered. Thus, each of the thicknesses is set to 50 µm or smaller.

When the clutch plate is used for a long time, a rate of change in the surface roughness can be reduced. As a result, even when the clutch plate is used for a long time and thus the surface is abraded, the contact area between clutch plates does not greatly vary. Thus, it is possible to reduce the rate of change in transmission torque before and after the clutch plate is used for a long time.

When the tempering process is performed, nonmagnetic residual austenite included in the nitrogen compound layer and the nitrogen diffusion layer can be transformed to magnetic martensite. Accordingly, it is possible to increase the magnetic permeability and the hardness of the clutch plate.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a surface structure of a sliding member or a clutch plate according to an embodiment of the present invention;
FIG. 2 is a flowchart illustrating a first method of producing the sliding member or the clutch plate illustrated in FIG. 1 (Example 1);
FIG. 3 is a diagram illustrating an example of a heat treatment process in S2 to S5 in FIG. 2 (Examples 1 and 2);
FIG. 4 is a diagram illustrating another example of the heat treatment process in S2 to S5 in FIG. 2 (Example 3);
FIG. 5 is a flowchart illustrating a second method of producing the sliding member or the clutch plate illustrated in FIG. 1 (Examples 2 and 3);
FIG. 6 is a flowchart illustrating a production method according to Comparative Example 1;
FIG. 7 is a diagram illustrating a heat treatment process in S23 to S25 in FIG. 6;
FIG. 8 is a flowchart illustrating a production method according to Comparative Example 2;
FIG. 9 is a diagram illustrating a heat treatment process in S33 and S34 in FIG. 8;
FIG. 10 is a flowchart illustrating a production method according to Comparative Example 3;
FIG. 11 is a diagram illustrating a heat treatment process in S43 to S45 in FIG. 10;
FIG. 12 is a photomicrograph of a sectional structure in Example 1;
FIG. 13 is a photomicrograph of a sectional structure in Example 2;
FIG. 14 is a photomicrograph of a sectional structure in Example 3;
FIG. 15 is a photomicrograph of a sectional structure in Comparative Example 1;
FIG. 16 is a photomicrograph of a sectional structure in Comparative Example 2;
FIG. 17 is a photomicrograph of a sectional structure in Comparative Example 3;
FIG. 18 is a graph illustrating hardness with respect to a depth from the surface of a target member;
FIG. 19 is a graph illustrating an amount of change in distortion before heating and after cooling;
FIG. 20 is a graph illustrating surface roughness;
FIG. 21 is a photomicrograph of a surface in Example 1;
FIG. 22 is a photomicrograph of a surface in Comparative Example 3;
FIG. 23 is a graph illustrating a rate of change in transmission torque before and after a real-machine durability and friction test;
FIG. 24 is a sectional view in an axial direction, which shows a drive power transmission device in which the clutch plate according to the embodiment is used;
FIG. 25 is a view of an outer plate illustrated in FIG. 24 when seen in the axial direction, where annular lines indicate grooves; and
FIG. 26 is a view of an inner plate illustrated in FIG. 24 when seen in the axial direction, where cross lines indicate grooves.

### DETAILED DESCRIPTION OF EMBODIMENTS

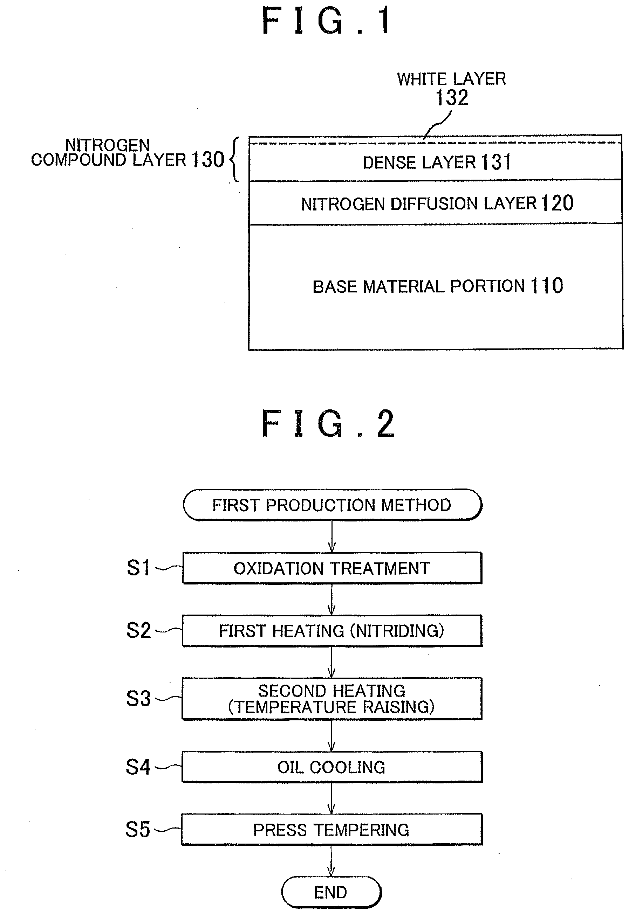

A sliding member or a clutch plate manufactured according to the present invention will be described below with reference to the accompanying drawings. The surface structure of the sliding member or the clutch plate will be described with reference to FIG. 1. The sliding member or the clutch plate is formed by performing nitriding treatment on the surface of a material formed of steel such as carbon steel. Examples of the sliding member include an iron-based clutch plate of an LSD clutch and a brake pad, in addition to a clutch plate constituting an electromagnetic clutch device.

As illustrated in FIG. 1, the sliding member includes a base material portion 110 formed of steel, a nitrogen diffusion layer 120 that is formed to have a thickness of 10 µm to 50 µm on the surface side of the base material portion 110, and a nitrogen compound layer 130 that is formed to have a thickness of 10 µm to 50 µm on the surface side of the nitrogen diffusion layer 120, and that constitutes an outermost surface. Steel having a carbon content of 0.10% to 0.20% is used as the material. In general, lower-carbon steel costs less but it is more difficult to increase the hardness of the surface of the low-carbon steel. However, according to the present invention, for example, hardness of the surface of low-carbon steel such as S15C can be increased as will be described later. The base material portion 110 is the same as the material.

Nitrogen is solid-dissolved in the nitrogen diffusion layer 120. The nitrogen compound layer 130 includes a dense layer 131 located at the base material portion 110-side and a white layer 132 located at the outermost surface-side. Since the dense layer 131 is lower in nitrogen concentration than the white layer 132 and is less porous, the dense layer is a portion having high hardness.

(Production Method) A method of heating the surface of the sliding member or the clutch plate (production method) will be described below. Two production methods are employed as the method of producing the sliding member or the clutch plate. Hereinafter, each of the methods will be described.

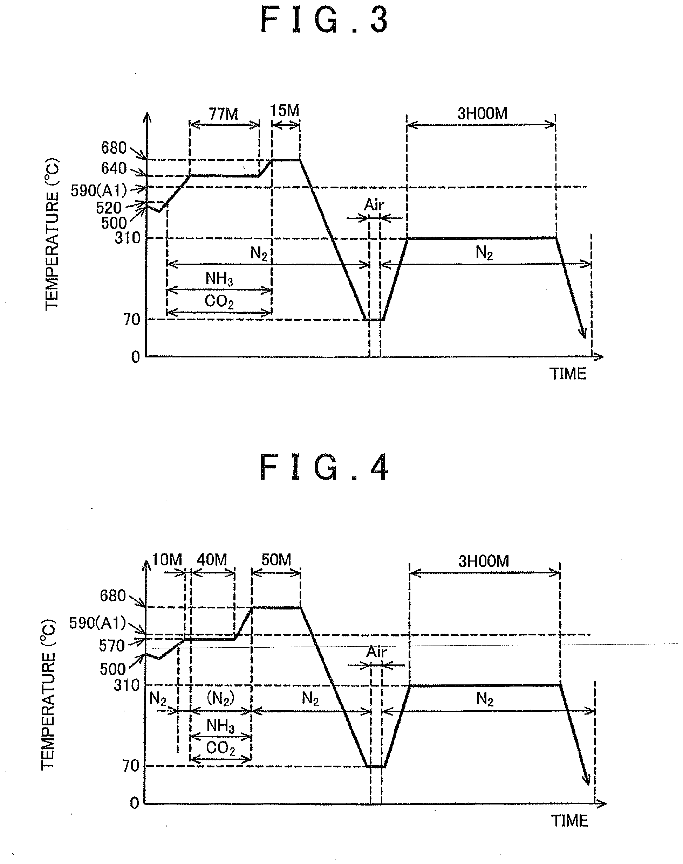

First, the first production method will be described below with reference to FIGS. 2 to 4. Each of FIGS. 3 and 4 is a process diagrams illustrating an example of the first production method. Oxidation treatment is performed on a material (S1). This oxidation treatment is treatment that is performed before nitriding treatment. By performing the oxidation treatment before the nitriding treatment, the material is easily nitrided. The oxidation treatment is performed in an oxidizing atmosphere at a temperature of 300°C to 450°C for one to two hours.

Subsequently, heat treatment is performed on the material in an ammonia atmosphere at 570°C to 660°C (first heating process S2). Specifically, the heat treatment is performed as illustrated in FIG. 3. First, the material is kept in a treatment room with a volume of 1 to 3 m³. The atmosphere temperature (i.e., the temperature of the atmosphere) in the treatment room at this time is equal to or lower than 500°C. Then, the atmosphere temperature in the treatment room starts rising to be 570°C to 660°C.

In the process diagram illustrated in FIG. 3, in the treatment room, an ammonia atmosphere is created when the atmosphere temperature reaches a temperature of 500°C to 550°C. In FIG. 3, a start temperature, at which the ammonia atmosphere starts to be created, is set to 520°C. For example, nitrogen gas (N₂) is supplied into the treatment room at 0 m³/hr to 5 m³/hr, ammonia gas (NH₃) is supplied into the treatment room at 3 m³/hr to 7 m³/hr, and carbon dioxide gas (CO₂) is supplied into the treatment room at 0.1 m³/hr to 0.6 m³/hr. In the ammonia atmosphere, the nitrogen gas may not be supplied.

When the atmosphere temperature reaches the temperature of 570°C to 660°C, the atmosphere temperature is maintained at the constant temperature of 570°C to 660°C for 30 minutes to two hours. At this time, the material is nitrided. In the constant temperature in the first heating process is set to 640°C in FIG. 3 and is set to 570°C in FIG. 4. Preferably, as illustrated in FIG. 3, the constant atmosphere temperature in the first heating process is set to a temperature higher than 590°C that is an A1 transformation point of Fe-N.

In another example, the first heating process may be performed as illustrated in the process diagram of FIG. 4. The atmosphere temperature in the treatment room starts to be raised from a temperature of 500°C or lower to a temperature of 570°C to 660°C. Nitrogen gas is supplied at 5 m³/hr while the atmosphere temperature is raised. When the atmosphere temperature reaches a temperature of 570°C to 660°C, the nitrogen atmosphere is maintained for 5 minutes to 30 minutes.

Subsequently, in order to change the atmosphere to the ammonia atmosphere, nitrogen gas is supplied into the treatment room at 0 m³/hr to 5 m³/hr, ammonia gas is supplied into the treatment room at 3 m³/hr to 7 m³/hr, and carbon dioxide gas is supplied into the treatment room at 0.1 m³/hr to 0.6 m³/hr. The ammonia atmosphere at 570°C to 660°C is maintained for 30 minutes to two hours. At this time, the material is nitrided. In the meantime, nitrogen gas may not be supplied.

Description will be continued with reference to FIG. 2 again. Subsequently to the first heating process, heat treatment is performed on the material in a non-oxidizing and non-ammonia atmosphere at a temperature of 660°C to 690°C (second heating process S3). Specifically, as illustrated in FIG. 3 or 4, temperature raising is performed from the constant temperature of 570°C to 660°C in the first heating process to an atmosphere temperature of 660°C to 690°C in the second heating process. The ammonia atmosphere is maintained while the temperature raising is performed.

When the atmosphere temperature is raised to the temperature of 660°C to 690°C, the supply of ammonia gas and carbon dioxide gas is stopped to form the nitrogen atmosphere. The nitriding does not occur in the nitrogen atmosphere. In the non-ammonia and non-oxidizing atmosphere, the atmosphere temperature is maintained at a constant temperature of 660°C to 690°C for 5 minutes to 1 hour. The treatment time in the second heating process needs to be a time that allows the temperature of the material to uniformly become the constant temperature of 660°C to 690°C. The constant temperature in the second heating process is set to 680°C in FIGS. 3 and 4.

Description will be continued with reference to FIG. 2 again. Subsequently to the second heating process, oil cooling is performed at an oil temperature of 60°C to 80°C (oil cooling process S4). Specifically, the material is put into quenching oil at an oil temperature of 60°C to 80°C in the nitrogen atmosphere. At this time, the material should not be oxidized. The oil temperature in the oil cooling process is set to 70°C in FIGS. 3 and 4.

When the temperature of the material in the oil cooling process reaches the oil temperature of the oil cooling process, the material is put into a heating furnace at a furnace temperature of 250°C to 400°C in the nitrogen atmosphere and tempering treatment is performed on the material for 1 hour to 5 hours while pressurizing the surface of the material (tempering process). This tempering treatment is also called press tempering. By the above-described treatment, the nitrogen compound layer 130 and the nitrogen diffusion layer 120 are formed on the surface of the material, as illustrated in FIG. 1.

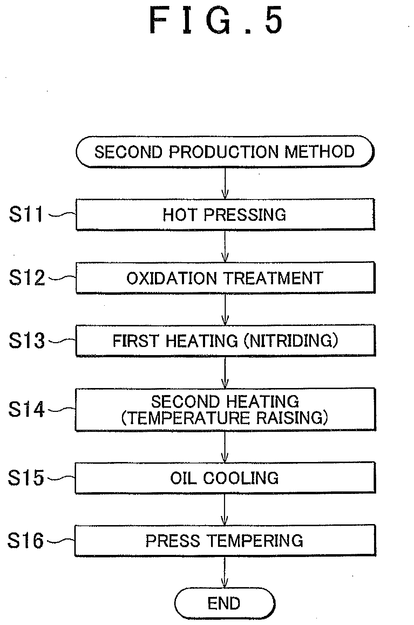

The second production method will be described below with reference to FIG. 5. In the second production method, hot pressing treatment is performed on a material as a process prior to the oxidation treatment in the first production method (S11). In the hot pressing treatment, a pressurizing force of 5 N or more is applied to the material at a temperature of 600°C to 700°C. Through the use of the hot pressing treatment, it is possible to reduce distortion of the material and to remove residual stress in the material. After performing the hot pressing treatment, oxidation treatment (S12), first heating (S13), second heating (S14), oil cooling (S15), and press tempering (S16) are performed in this order, similarly to the first embodiment.

(Comparison Test) Then, hardness of a member obtained through the use of the production method according to this embodiment, an amount of change in distortion (flatness) after cooling the member, surface roughness of the member, and a rate of change in transmission torque before and after a real-machine durability and friction test when this embodiment is applied to a clutch plate are estimated.
(Example 1) In Example 1 of this embodiment, the first production method illustrated in FIG. 2 and the heating process illustrated in FIG. 3 are employed. In Example 1, S15C is used as a material, the volume of a treatment room is set to 2 m³, and ammonia gas is supplied at 5 m³/hr and carbon dioxide gas is supplied at 0.3 m³/hr in the first heating process. In the first heating process and the second heating process, nitrogen gas is supplied to the treatment room at 5 m³/hr. High-performance high-speed quenching oil (kinematic viscosity: 16±2.5 mm²/s (40°C), flash point (COC): 178°C, cooling performance characteristic temperature: 620°C, product name: Special Quenching Oil V-1700S (made by NIPPON GREASE Co., Ltd.)) for vacuum heat treatment corresponding to JIS class 1 No. 2 using paraffin base oil is used as the cooling oil (quenching oil) in the oil cooling process. After the oil cooling process, press tempering is performed at 310°C for 3 hours.
(Example 2) In Example 2 of this embodiment, the second production method illustrated in FIG. 5 and the heating process illustrated in FIG. 3 are employed. Example 2 is the same as Example 1, except that hot pressing treatment is added to Example 1.
(Example 3) In Example 3 of this embodiment, the second production method illustrated in FIG. 5 and the heating process illustrated in FIG. 4 are employed. The amounts of ammonia gas, carbon dioxide gas, and nitrogen gas supplied, the oil cooling process, and the like are the same as in Example 1.

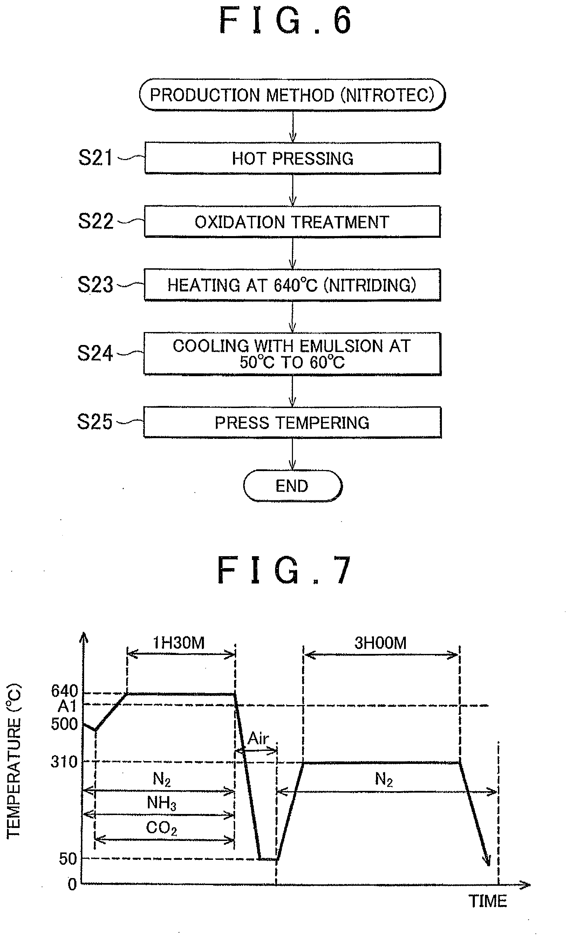

(Comparative Example 1) In Comparative Example 1, the NITROTEC method, the flowchart illustrated in FIG. 6, and the heating process illustrated in FIG. 7 are employed. In this case, the same S15C as in Examples 1 to 3 is used as the material. Specifically, hot pressing treatment (S21), oxidation treatment (S22), heating treatment at 640°C (S23), water-oil emulsion cooling at 50°C to 60°C (S24), and press tempering (S25) are performed in this order.

After the heating treatment of S23, the followings are performed. The treatment room with a volume of 2 m³ is supplied with nitrogen gas at 5.5 m³/hr and is supplied with ammonia gas at 5.5 m³/hr. The room temperature of the treatment room is temporarily decreased, and carbon dioxide gas starts to be supplied to the treatment room at 0.48 m³/hr when the temperature starts to be raised. The room temperature of the treatment room is raised to 640°C. After the rise in temperature to 640°C is completed, the treatment room is maintained at that temperature for 1 hour and 30 minutes (heating process).

After the heating process, the treatment room is opened to the air to oxidize the material. Thereafter, the material is cooled with water-oil emulsion at 50°C to 60°C (cooling process). After the cooling process, the material is put into a heating furnace with a furnace temperature of 310°C and tempering treatment is performed on the material for 3.0 hours while pressurizing the surface of the material (tempering process). Thereafter, the treatment ends.

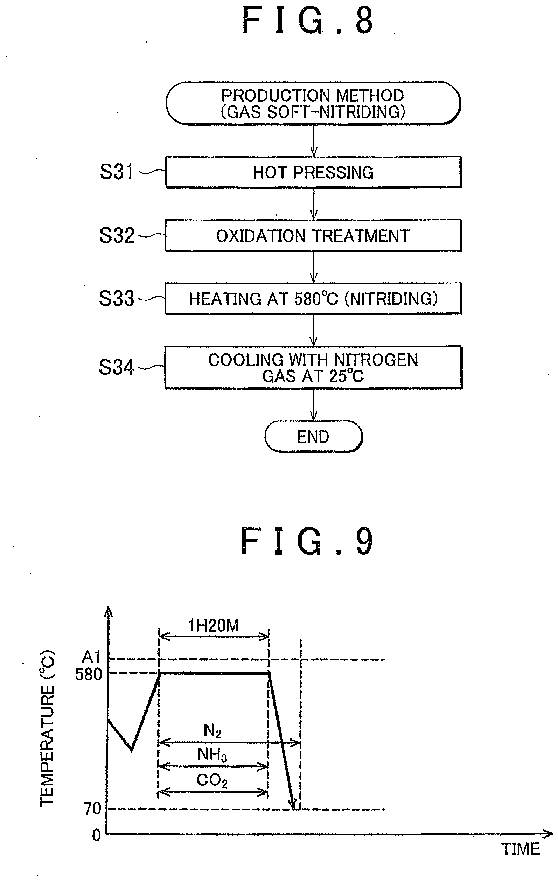

(Comparative Example 2) In Comparative Example 2, gas soft-nitriding treatment is performed, and the flowchart illustrated in FIG. 8 and the heating process illustrated in FIG. 9 are employed. In this case, the same S15C as in Examples 1 to 3 is used as the material. Specifically, hot pressing treatment (S31), oxidation treatment (S32), heating treatment at 580°C (S33), and nitrogen gas cooling at 25°C (S34) are performed in this order.

After the heating treatment of S33, the followings are performed. The temperature of the treatment room with a volume of 2 m³ is raised to 580°C. This temperature is lower than 590°C that is the A1 transformation point of Fe-N. After the rise in temperature is completed, the treatment room is supplied with nitrogen gas at 3 m³/hr, and is supplied with ammonia gas at 8 m³/hr, and is supplied with carbon dioxide gas at 0.3 m³/hr. The treatment room is maintained in this state for 1 hour and 20 minutes (heating process). After the heating process, the material is cooled in the nitrogen gas atmosphere at 25°C (cooling process). Thereafter, the treatment ends.

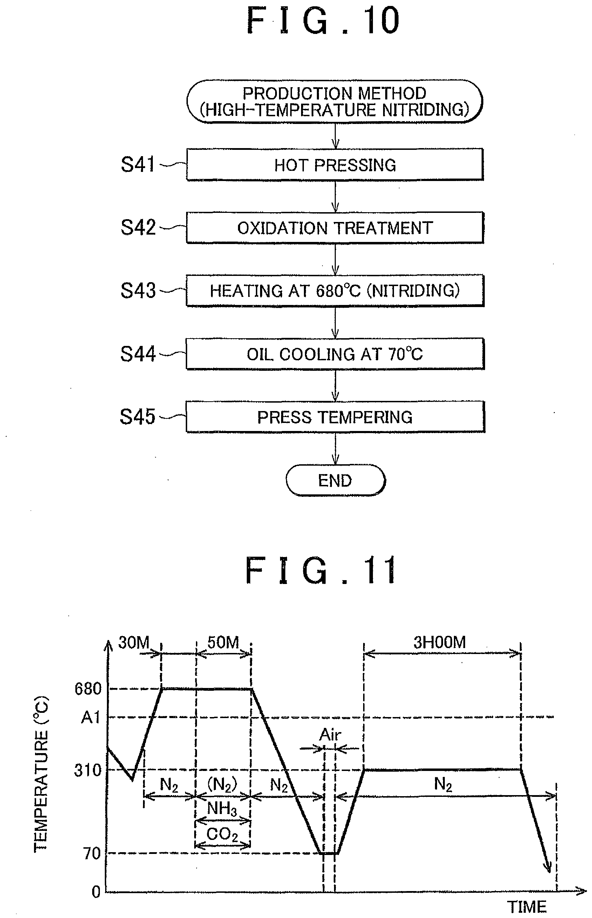

(Comparative Example 3) In Comparative Example 3, high-temperature nitriding treatment is performed, and the flowchart illustrated in FIG. 10 and the heating process illustrated in FIG. 11 are employed. In this case, the same S15C as in Examples 1 to 3 is used as the material. Specifically, hot pressing treatment (S41), oxidation treatment (S42), heating treatment at 680°C (S43), oil cooling at 70°C (S44), and press tempering (S45) are performed in this order.

After the heating treatment of S43, the followings are performed. The temperature of the treatment room with a volume of 2 m³ is raised to 680°C. The treatment room is supplied with nitrogen gas at 5 m³/hr in the course of raising the temperature. After the rise in temperature is completed, the treatment room is maintained in this state for 30 minutes. Thereafter, the atmosphere of the treatment room is changed to the ammonia atmosphere. In the ammonia atmosphere, the supply of nitrogen gas is stopped, and the treatment room is supplied with ammonia gas at 5 m³/hr and is supplied with carbon dioxide gas at 0.3 m³/hr. The treatment room is maintained in this state for 50 minutes. Thereafter the oil cooling process and the press tempering process are performed in the same manner as in Example 1.

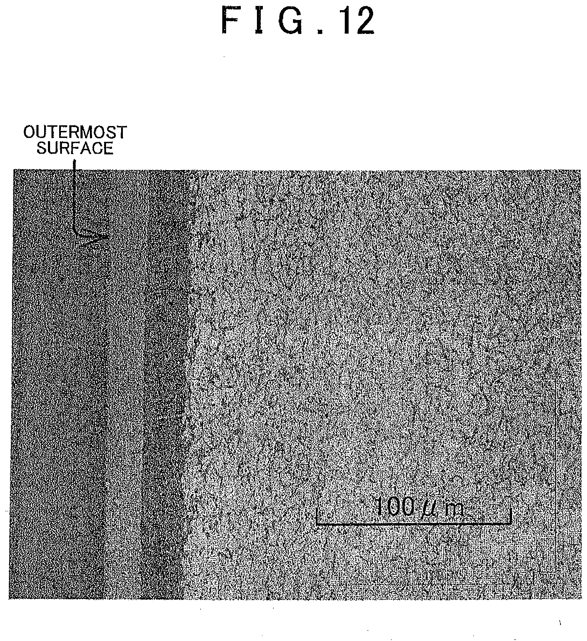

(Photomicrograph of Sectional Structure) Photomicrographs of sectional structures on the surface side of the members are shown in FIGS. 12 to 17. In Example 1 of this embodiment, a white layer of a nitrogen compound layer is slightly formed at the outermost surface and a dense layer of the nitrogen compound layer is formed at a position deeper than the white layer, as illustrated in FIG. 12. The thickness of the nitrogen compound layer is about 20 µm. A nitrogen diffusion layer is formed at a position deeper than the nitrogen compound layer. The thickness of the nitrogen diffusion layer is about 25 µm.

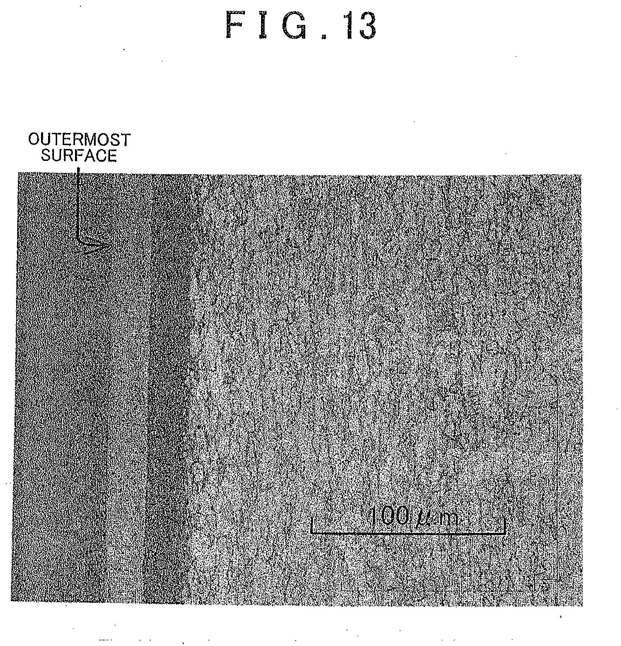

In Example 2, as illustrated in FIG. 13, a white layer is slightly formed at the outermost surface, and a dense layer is formed at a position deeper than the white layer, and thus, a nitrogen compound layer with a thickness of about 17 µm is formed, and a nitrogen diffusion layer with a thickness of about 23 µm is formed at a deeper position.

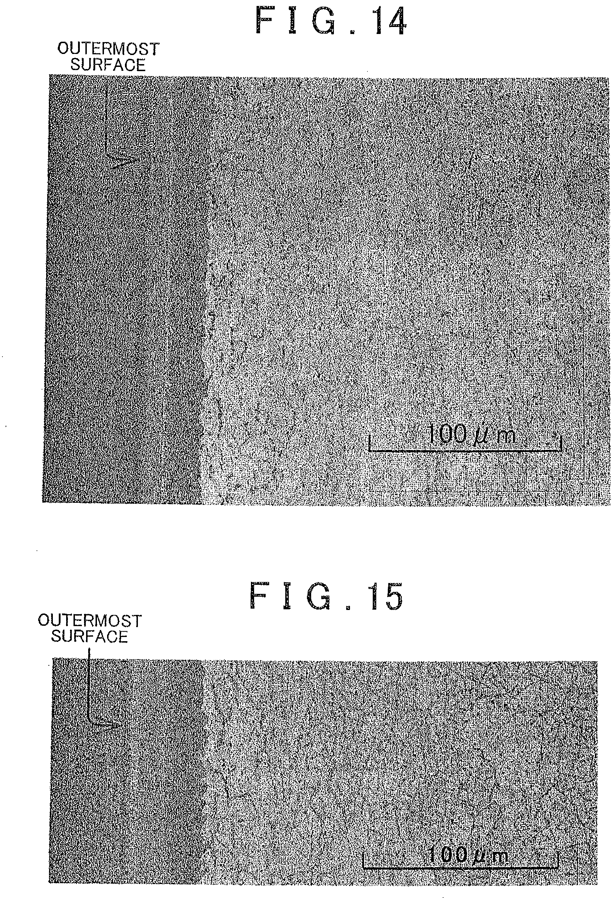

In Example 3, as illustrated in FIG. 14, a white layer is slightly formed at the outermost surface, and a dense layer is formed at a position deeper than the white layer, and thus, a nitrogen compound layer with a thickness of about 15 µm is formed, and a nitrogen diffusion layer with a thickness of about 22 µm is formed at a deeper position.

In Comparative Example 1, as illustrated in FIG. 15, an oxide film is slightly formed at the outermost surface, a nitrogen compound layer with a thickness of about 25 µm is formed at a position deeper than the white layer, and a nitrogen diffusion layer with a thickness of about 17 µm is formed at a deeper position.

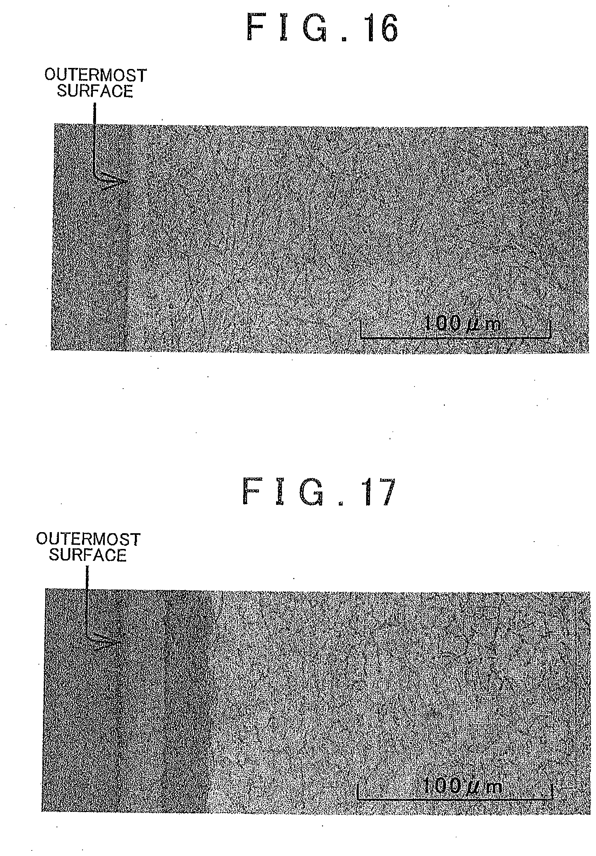

In Comparative Example 2, as illustrated in FIG. 16, a nitrogen compound layer with a thickness of about 15 µm is formed at the outermost surface. In this case, substantially no nitrogen diffusion layer is formed. That is, a base material is disposed at a position deeper than the nitrogen compound layer.

In Comparative Example 3, as illustrated in FIG. 17, a white layer is slightly formed at the outermost surface, and a dense layer is formed at a position deeper than the white layer, and thus, a nitrogen compound layer with a thickness of about 25 µm is formed, and a nitrogen diffusion layer with a thickness of about 25 µm is formed at a deeper position.

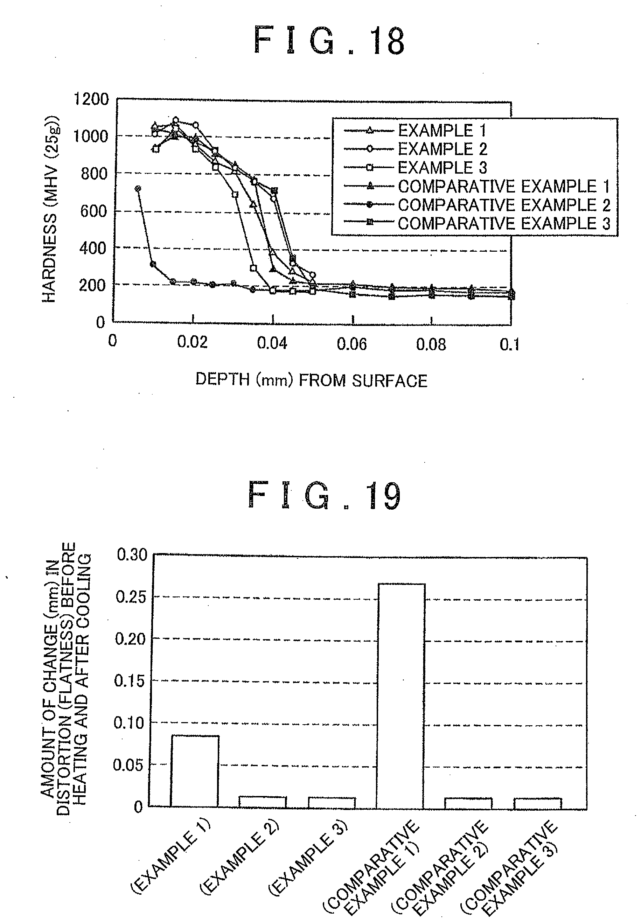

(Hardness) Hardness MHV (25 g) with respect to the depth from the surface will be described below with reference to FIG. 18. In Examples 1 to 3 and Comparative Examples 1 and 3, the maximum hardness is higher than 1000 MHV. In Examples 1 and 2 and Comparative Examples 1 and 3, a portion from the surface to the vicinity of a depth of 30 µm has high hardness equal to or higher than 800 MHV and the hardness up to the vicinity of a depth of 50 µm is higher than the hardness of the base material. That is, high hardness is achieved by the nitrogen compound layer formed to the vicinity of a depth of 25 µm from the surface. By forming the nitrogen diffusion layer on a deep side, it is possible to increase the thickness of the portion having high hardness.

In Example 3, a portion from the surface to the vicinity of a depth of 25 µm has high hardness of 800 MHV or more and the hardness up to the vicinity of a depth of 40 µm is higher than the hardness of the base material. The reason is considered to be that the nitrogen compound layer and the nitrogen diffusion layer are thinner than in the above-described cases.

In Comparative Example 2, the maximum hardness is higher than 700 MHV by the gas soft-nitriding treatment but the portion having high hardness of 700 MHV or higher extends from the surface to the vicinity of a depth of 6 µm. The hardness is lowered to 300 MHV in the vicinity of a depth of 10 µm from the surface and the hardness in the vicinity of a depth of 15 µm from the surface is substantially equal to the hardness of the base material. As illustrated in FIG. 16, this depth corresponds to the depth at which the nitrogen compound layer is formed.

(Amount of Change in Distortion (Flatness) Before Heating Process and After Cooling Process) An amount of change in an amount of distortion (flatness) after the cooling process with respect to an amount of distortion (flatness) before the heating process will be described below with reference to FIG. 19. In Examples 2 and 3 and Comparative Examples 2 and 3, the amount of change in distortion is about 0.01 mm. In Example 1, the amount of change in distortion is 0.08 mm. In Comparative Example 1, the amount of change in distortion is 0.27 mm. It is thought that the amount of change in distortion in Comparative Example 1 is large because the temperature of a cooling liquid is 50°C to 60°C, which is low, and thus the cooling rate is high.

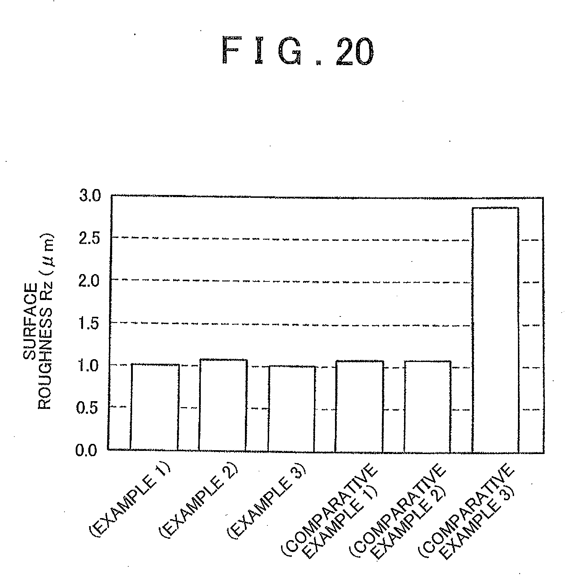

(Surface Roughness) The surface roughness Rz (10-point average roughness) (JISB0601: 1994) of a produced clutch plate in each test result will be described below with reference to FIG. 20. In Examples 1 to 3 and Comparative Examples 1 and 2, the surface roughness is about 1.0 µm. The surface roughness in Comparative Example 3 is 2.9 µm.

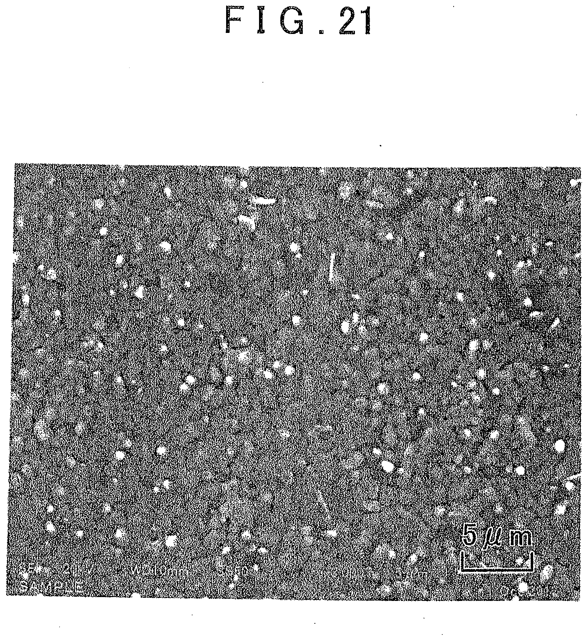

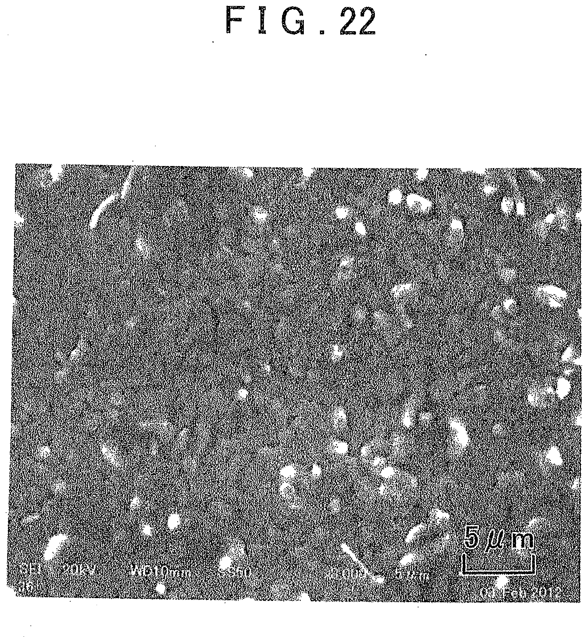

(Photomicrograph of Surface) Photomicrographs of the surface of the clutch plate in Example 1 and Comparative Example 3 are illustrated in FIGS. 21 and 22. From FIGS. 21 and 22, it is evident that plural small protrusions are present in Example 1 and Comparative Example 3. It is also evident that the diameter of protrusions in Example 1 illustrated in FIG. 21 is smaller than the diameter of protrusions in Comparative Example 3 illustrated in FIG. 22. Since the nitriding temperature in Example 1 is lower than that in Comparative Example 3, it is through that growth of protrusions on the surface at the time of nitriding is reduced.

The fact that the surface roughness Rz in Example 1 is smaller than the surface roughness Rz in Comparative Example 3 as illustrated in FIG. 20 is relevant to the fact that the diameter of protrusions in Example 1 is smaller than that in Comparative Example 3 as illustrated in FIGS. 21 and 22.

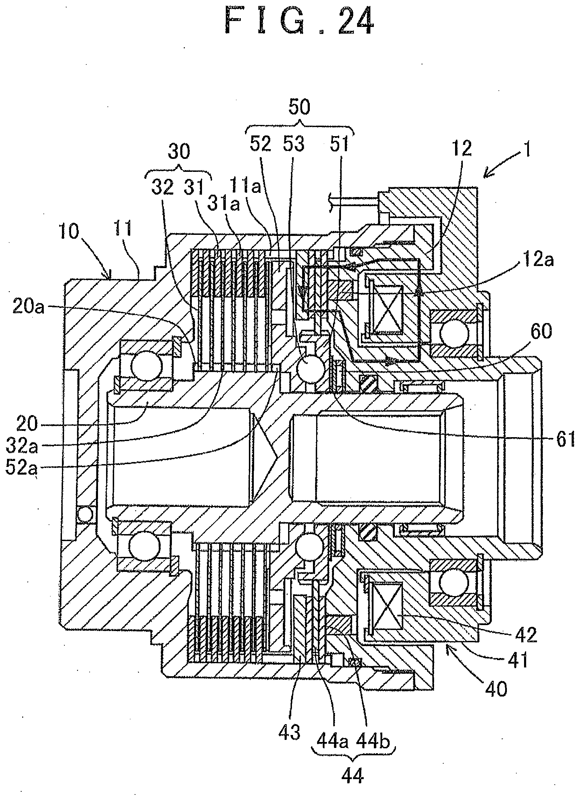

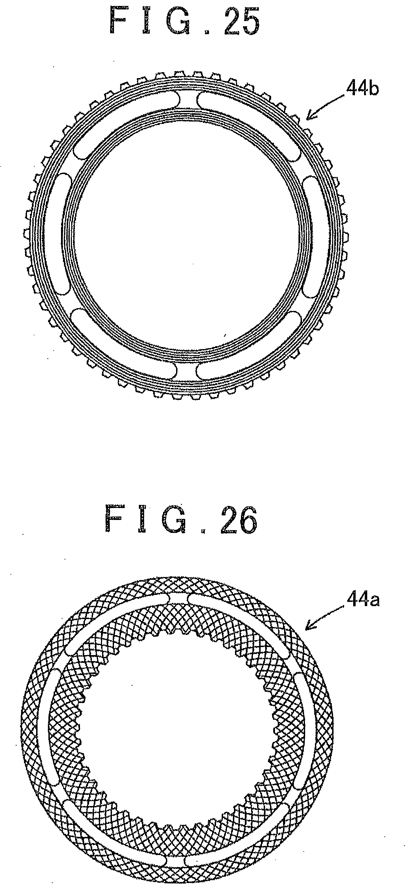

(Real-machine Durability and Friction Test) A real-machine durability and friction test was performed on the respective members. An electromagnetic clutch constituting a drive power transmission device was used in the test. Specifically, the surface treatment in Examples 1 to 3 and Comparative Examples 1 to 3 was performed on an outer pilot clutch plate 44b (see FIGS. 24 and 25) constituting the electromagnetic clutch and having plural coaxial annular grooves. An inner pilot clutch plate 44a (see FIGS. 24 and 26) having plural cross grooves as a counter member for the outer pilot clutch plate 44b was coated with a diamond-like carbon (DLC) film. The durability test was performed under the following test conditions. The surface pressure of the electromagnetic clutch portion was 0.2 MPa, the slipping speed was 0.02 m/s, lubrication was achieved by a coupling fluid (kinematic viscosity: 40°C, 23 mm²/s), the coupling surface temperature was 90°C to 100°C, continuous slipping was performed during a durability time of 480 hours, and the energy was 380 W.

A rate of change of transmission torque between the clutch plates 44a and 44b after the friction test with respect to transmission torque before the friction test was measured. The surfaces of the plates 44a and 44b were abraded by the friction test and the contact area therebetween varied. Accordingly, the transmission torque therebetween increased after the friction test, as compared to that before the test. It is estimated that the durability is higher as the rate of change in transmission torque before and after the friction test is smaller.

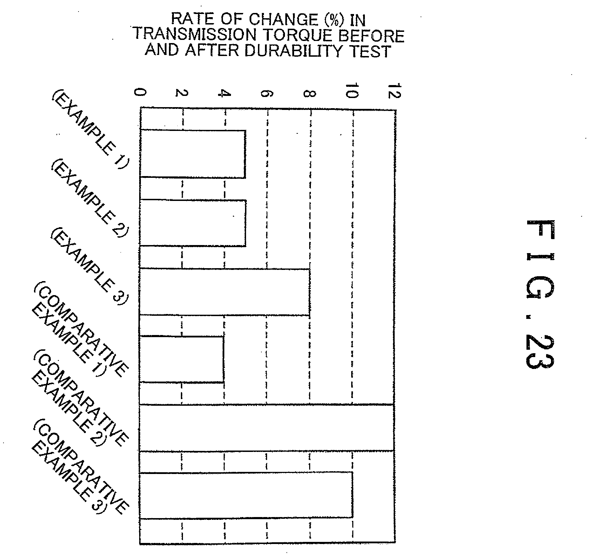

As illustrated in FIG. 23, the rate of change in Comparative Example 1 was about 4% which is the smallest. The rate of change in Examples 1 and 2 were about 5%, the rate of change in Example 3 was about 8%. The rate of change in Comparative Example 2 was about 12% and the rate of change in Comparative Example 3 was about 10%.

(Conclusion) In Examples 1 to 3, since the cooling after the heating process (S3 in FIG. 2 and S14 in FIG. 5) is performed by oil cooling, oil is used and water is not used for the cooling liquid. Accordingly, it is possible to suppress formation of rust on the surface of the sliding member. Due to the nature of the oil, the oil used for the oil cooling is lower in a cooling rate than water used for water cooling. By employing the oil cooling, the temperature can be set to be higher than that in the case where the cooling liquid including water is used. Accordingly, the cooling rate in the oil cooling can be made lower than the cooling rate in the case where the cooling liquid including water is used. As a result, the amount of change in distortion (flatness) of the surface of the sliding member before heating and after cooling can be reduced.

In the first heating process (S2 in FIG. 2 and S13 in FIG. 5), heat treatment is performed in the ammonia atmosphere. That is, the material is nitrided in the first heating process. The temperature in the first heating process is 570°C to 660°C. By heating the material at 570°C or higher, it is possible to ensure that each of the nitrogen compound layer 130 and the nitrogen diffusion layer 120 has the thickness of 10 µm to 50 µm.

Particularly, by setting the atmosphere temperature in the first heating process to a temperature equal to or higher than 590°C which is the A1 transformation point of Fe-N, it is possible to ensure that each of the nitrogen compound layer 130 and the nitrogen diffusion layer 120 has the thickness of 10 µm to 50 µm as evident from FIGS. 12 to 14.

By nitriding the material at the above-described temperature, it is possible to reduce the surface roughness of the sliding member after the heat treatment as compared to a case where the material is nitrided at a temperature higher than 660°C as illustrated in FIG. 20. By reducing the surface roughness of the sliding member after the heat treatment, it is possible to reduce the final surface roughness of the sliding member after the cooling. Therefore, it is possible to reduce the amount of change in the surface roughness after the sliding member is used for a long time. As a result, when the sliding member is applied to a clutch plate and the surface of the clutch plate is abraded, the contact area between clutch plates does not greatly vary. Thus, it is possible to reduce the rate of change in transmission torque before and after the clutch plate is used for a long time.

In the case where the heating temperature at which the heat treatment is performed for nitriding (the temperature in the first heating process) is set to 570°C to 660°C and the oil cooling is performed from the temperature, since the oil cooling temperature is 60°C to 80°C which is higher than the water cooling temperature as described above, the cooling temperature difference decreases. Therefore, subsequently to the first heating process for nitriding, the atmosphere temperature is raised to 660°C to 690°C (second heating process) and then the oil cooling is performed. That is, the oil cooling is performed with a start temperature being set to 660°C to 690°C, whereby it is possible to secure a sufficient temperature difference.

Accordingly, even when the oil temperature in the oil cooling process (S4 in FIG. 2 and S15 in FIG. 5) is set to 60°C or higher, it is possible to ensure that each of the nitrogen compound layer and the nitrogen diffusion layer has the thickness of 10 µm to 50 µm, by setting the atmosphere temperature in the second heating process immediately before the oil cooling process, to a temperature equal to or higher than 660°C which is sufficiently higher than 590°C which is the A1 transformation point of Fe-N.

By setting the atmosphere temperature in the second heating process to 660°C or higher and setting the oil temperature to 80°C or lower, it is possible to ensure that each of the nitrogen compound layer and the nitrogen diffusion layer has the thickness of 10 µm to 50 µm. Therefore, it is possible to increase the hardness in the surface side. As a result, it is possible to improve abrasion resistance. By forming the nitrogen compound layer and the nitrogen diffusion layer each having the thickness of 10 µm or more, it is possible to secure the sufficient hardness in the surface side of the sliding member and to reduce the variation in hardness in the surface side even when the surface is abraded.

By setting the oil temperature in the oil cooling process to 60°C or higher, it is possible to sufficiently reduce deformation of a material which is a problem in the related art, as shown in FIG. 19. By setting the atmosphere temperature in the second heating process to 690°C or lower, it is possible to reduce diffusion (loss) of the nitrogen compound layer and to enhance the hardness in the surface side.

In the oil cooling process in Examples 1 to 3, the oil cooling is performed in a non-oxidizing atmosphere. That is, the oxidation treatment is not actively performed after the heating process, unlike the NITROTEC method in Comparative Example 1. That is, an oxide film is not likely to be formed on the surface of the sliding member. Accordingly, in Examples 1 to 3, it is possible to increase the surface flatness.

By performing press tempering treatment (S5 in FIG. 2 and S16 in FIG. 5) after the oil cooling process, it is possible to remove internal distortion and to further increase the surface flatness. By performing the press tempering process, nonmagnetic residual austenite included in the nitrogen compound layer 130 and the nitrogen diffusion layer 120 can be transformed to magnetic martensite. Accordingly, it is possible to increase the magnetic permeability and the hardness of the clutch plate.

The nitrogen compound layer 130 in Examples 1 and 2 is thicker than that in Example 3. Accordingly, it is thought that in the second heating process, as the heat treatment time at the temperature of 660°C to 690°C increases, the diffusion (loss) of the nitrogen compound layer increases. Therefore, by shortening the treatment time at the above-described temperature in the second heating process, it is possible to reduce the diffusion of the nitrogen compound layer 130 and to secure the hardness. On the other hand, since the first heating process is a process of performing nitriding treatment, it is necessary to secure the sufficient heat treatment time at 570°C to 660°C. Therefore, by setting the heat treatment times so that the heat treatment time at 660°C to 690°C in the second heating process is shorter than the heat treatment time at 570°C to 660°C in the first heating process as in Examples 1 and 2, it is possible to satisfy all the above-described requirements.

In Examples 1 to 3, the heat treatment at the ammonia atmosphere temperature is performed until the atmosphere temperature is raised to the atmosphere temperature in the second heating process from the atmosphere temperature in the first heating process. Accordingly, it is possible to ensure that each of the nitrogen compound layer 130 and the nitrogen diffusion layer 120 has the sufficient thickness, and it is possible to reduce the surface roughness. The supply of ammonia gas may be stopped when the temperature raising from the atmosphere temperature in the first heating process is started.

In Examples 1 and 2, in the treatment room, the ammonia atmosphere is created at an atmosphere temperature of 500°C to 550°C. Thus, by starting to create the ammonia atmosphere at an atmosphere temperature of 550°C or lower, it is possible to reduce nitriding unevenness, that is, nitriding irregularity. In general, as the atmosphere temperature is lower, the nitriding efficiency is lower, and as the atmosphere temperature is higher, the nitriding efficiency is higher. That is, by starting to create the ammonia atmosphere in a state where the nitriding efficiency is low, it is possible to change the entire atmosphere to the ammonia atmosphere when the atmosphere temperature reaches a temperature at which the nitriding efficiency is high. As a result, it is possible to reduce the nitriding unevenness. When the ammonia atmosphere starts to be created at an atmosphere temperature lower than 500°C, the nitriding unevenness occurs. Therefore, by setting the start temperature, at which supply of ammonia gas is started, to 500°C or higher, it is possible to reduce the nitriding unevenness.

As described above, each of the thicknesses of the nitrogen compound layer 130 and the nitrogen diffusion layer 120 is set to 50 µm or smaller. When each of the thicknesses is greater than 50 µm, magnetic permeability is lowered. Accordingly, a magnetic flux density of the clutch plate is lowered and thus a frictional engaging force between the clutch plates is lowered. Thus, each of the thicknesses is set to 50 µm or smaller.

(Drive Power Transmission Device Using Electromagnetic Clutch Device) A drive power transmission device 1 using the clutch plate of the above-described electromagnetic clutch device will be described below with reference to FIG. 24. For example, the drive power transmission device 1 is applied to a drive power transmission system for transmitting a drive power to an auxiliary driving wheel-side depending on a vehicle traveling state, in a four-wheel drive vehicle. More specifically, in the four-wheel drive vehicle, the drive power transmission device 1 is connected, for example, between a propeller shaft to which the drive power of an engine is transmitted and a rear differential. The drive power transmission device 1 transmits the drive power transmitted from the propeller shaft to the rear differential at a variable transmission ratio. The drive power transmission device 1 serves to reduce a rotation difference when the rotation difference occurs between front wheels and rear wheels.

The drive power transmission device 1 includes a so-called electronic control coupling. As illustrated in FIG.. 24, the drive power transmission device 1 includes an outer case 10 as an outer rotating member, an inner shaft 20 as an inner rotating member, a main clutch 30, an electromagnetic clutch device 40 constituting a pilot clutch mechanism, and a cam mechanism 50.

The outer case 10 is located on the inner peripheral side of a cylindrical hole cover (not illustrated) and is supported so as to be rotatable about the hole cover. The outer case 10 has a cylindrical shape as a whole and includes a front housing 11 disposed at the front side and a rear housing 12 disposed at the rear side, that is, behind the front housing 11 in the vehicle.

The front housing 11 is formed of, for example, an aluminum alloy that is a nonmagnetic material including aluminum as a main component, and the front housing 11 has a bottomed cylindrical shape. The outer peripheral surface of the cylindrical portion of the front housing 11 is rotatably supported on the inner peripheral surface of the hole cover through a bearing. The bottom of the front housing 11 is connected to a vehicle rear end portion of the propeller shaft (not illustrated). That is, an opening of a bottomed cylinder of the front housing 11 is directed to the vehicle rear side. A female spline 11a is formed in an axial central portion of the inner peripheral surface of the front housing 11 and a female thread is formed in the inner peripheral surface at a position in the vicinity of the opening.

The rear housing 12 has an annular shape and is disposed radially inside the opening side portion of the front housing 11 so as to be integrated with the front housing 11. An annular groove is formed at the vehicle rear side portion of the rear housing 12 over the entire circumference. An annular member 12a is provided in a part of the annular groove bottom of the rear housing 12. The annular member 12a is formed of, for example, stainless steel as a nonmagnetic material. A portion of the rear housing 12 other than the annular member 12a is formed of a material (hereinafter, referred to as "iron-based material") including iron, which is a magnetic material, as a main component so as to form a magnetic circuit. A male thread is formed on the outer peripheral surface of the rear housing 12. The male thread is screwed to the female thread of the front housing 11. The front housing 11 and the rear housing 12 are fixed to each other by fastening the female thread of the front housing 11 to the male thread of the rear housing 12 so as to bring the opening-side end face of the front housing 11 into contact with the end face of a step portion of the rear housing.

The inner shaft 20 has a shaft shape and includes a male spline 20a in an axial central portion of the outer peripheral surface thereof. The inner shaft 20 liquid-tightly extends through a through-hole at the center of the rear housing 12 and is coaxially disposed in the outer case 10 so as to be relatively rotatable. The inner shaft 20 is rotatably supported by the front housing 11 and the rear housing 12 through bearings in a state where the axial position of the inner shaft 20 is restricted relative to the front housing 11 and the rear housing 12. A vehicle rear end portion (the right side portion in FIG. 24) of the inner shaft 20 is connected to a differential gear (not illustrated). A space liquid-tightly defined by the outer case 10 and the inner shaft 20 is filled with lubricant at a predetermined filling rate.

The main clutch 30 transmits torque between the outer case 10 and the inner shaft 20. The main clutch 30 is a wet multi-plate frictional clutch formed of an iron-based material. The main clutch 30 is disposed between the inner peripheral surface of the cylindrical portion of the front housing 11 and the outer peripheral surface of the inner shaft 20. The main clutch 30 is disposed between the bottom of the front housing 11 and the vehicle front side end face of the rear housing 12. The main clutch 30 includes inner main clutch plates 32 and outer main clutch plates 31, which are alternately arranged in the axial direction. A female spline 32a is formed at the inner peripheral side of each inner main clutch plate 32 and is fitted to the male spline 20a of the inner shaft 20. A male spline 31a is formed at the outer peripheral side of each outer main clutch plate 31 and is fitted to the female spline 11a of the front housing 11.

The electromagnetic clutch device 40 cause the pilot clutches 44 to engage with each other by attracting an armature 43 toward a yoke 41 by a magnetic force. That is, the electromagnetic clutch device 40 transmits torque of the outer case 10 to a support cam member 51 constituting the cam mechanism 50. The electromagnetic clutch device 40 includes the yoke 41, an electromagnetic coil 42, the armature 43, and the pilot clutches 44.

The yoke 41 has an annular shape and is housed in the annular groove of the rear housing 12 with a gap being formed between the yoke 41 and the annular groove so that the yoke 41 is rotatable relative to the rear housing 12. The yoke 41 is fixed to the hole cover. The inner peripheral side of the yoke 41 is rotatably supported by the rear housing 12 through a bearing. The electromagnetic coil 42 is formed in an annular shape by winding a winding, and is fixed to the yoke 41.

The armature 43 is formed of an iron-based material and has an annular shape. The armature 43 includes a male spline formed on the outer peripheral side thereof. The armature 43 is disposed in the axial direction between the main clutch 30 and the rear housing 12. The outer peripheral side of the armature 43 is fitted to the female spline 11a of the front housing 11. The armature 43 is attracted toward the yoke 41 when a current is supplied to the electromagnetic coil 42.

The pilot clutches 44 transmit torque between the outer case 10 and the support cam member 51. The pilot clutches 44 are formed of an iron-based material. The pilot clutches 44 are disposed between the inner peripheral surface of the cylindrical portion of the front housing 11 and the outer peripheral surface of the support cam member 51. The pilot clutches 44 are disposed between the armature 43 and the vehicle front side end face of the rear housing 12. The pilot clutches 44 include the inner pilot clutch plate 44a (see FIGS. 24 and 26) and the outer pilot clutch plates 44b (see FIGS. 24 and 25), which are alternately arranged in the axial direction. A female spline is formed at the inner peripheral side of the inner pilot clutch plate 44a and is fitted to the male spline of the support cam member 51. A male spline is formed at the outer peripheral side of the outer pilot clutch plate 44b and is fitted to the female spline 11a of the front housing 11.

When a current is supplied to the electromagnetic coil 42, a magnetic circuit passing through the yoke 41, the outer peripheral side of the rear housing 12, the pilot clutches 44, the armature 43, the pilot clutches 44, the inner peripheral side of the rear housing 12, and the yoke 41 is formed as indicated by an arrow in FIG. 24. Then, the armature 43 is attracted toward the yoke 41, and the inner pilot clutch plate 44a and the outer pilot clutch plates 44b frictionally engage with each other. Then, the torque of the outer case 10 is transmitted to the support cam member 51. When the supply of a current to the electromagnetic coil 42 is stopped, the attracting force on the armature 43 disappears, and the frictional engaging force between the inner pilot clutch plate 44a and the outer pilot clutch plates 44b is eliminated.

The cam mechanism 50 is disposed between the main clutch 30 and the pilot clutches 44, and converts the torque, which is transmitted via the pilot clutches 44, and which is based on the rotation difference between the outer case 10 and the inner shaft 20, into an axial pressing force to press the main clutch 30. The cam mechanism 50 includes the support cam member 51, a movable cam member 52, and cam followers 53.

The support cam member 51 has an annular shape, and includes a male spline formed on the outer peripheral side thereof. A cam groove is formed on the vehicle front side end face of the support cam member 51. The support cam member 51 is disposed with a gap from the outer peripheral surface of the inner shaft 20 and is supported by the vehicle front side end face of the rear housing 12 through a bearing 60. Therefore, the vehicle rear side end face of the support cam member 51 comes into contact with a raceway plate of the thrust bearing 60 with a shim 61 interposed therebetween. That is, the support cam member 51 is disposed so as to be rotatable relative to the inner shaft 20 and the rear housing 12 and to be restricted in the axial direction. The male spline of the support cam member 51 is fitted to the female spline of the inner pilot clutch plate 44a.

A large portion of the movable cam member 52 is formed of an iron-based material. The movable cam member 52 has an annular shape and includes a female spline 52a formed on the inner peripheral side thereof. The movable cam member 52 is disposed in front of the support cam member 51 in the vehicle. A cam groove is formed on the vehicle rear side end face of the movable cam member 52 so as to face the cam groove of the support cam member 51 in the axial direction. The female spline of the movable cam member 52 is fitted to the male spline 20a of the inner shaft 20. Therefore, the movable cam member 52 rotates together with the inner shaft 20. The vehicle front side end face of the movable cam member 52 can come into contact with the inner main clutch plate 32 disposed at the vehicle rearmost side of the main clutch 30. When the movable cam member 52 moves toward the vehicle front side, the movable cam member 52 presses the inner main clutch plate 32 toward the vehicle front side.

Each cam follower 53 has a ball shape and is interposed between the opposed cam grooves of the support cam member 51 and the movable cam member 52. That is, when a rotation difference occurs between the support cam member 51 and the movable cam member 52, the movable cam member 52 moves relative to the support cam member 51 in a direction (toward the vehicle front side) in which the support cam member 51 and the movable cam member 52 are spaced apart from each other, by the operations of the cam followers 53 and the cam grooves. The amount of axial movement of the movable cam member 52 relative to the support cam member 51 increases, as the torsion angle between the support cam member 51 and the movable cam member 52 increases.

(Basic Operation of Drive Power Transmission Device) The basic operation of the drive power transmission device 1 having the above-described configuration will be described below. A case where a rotation difference occurs between the outer case 10 and the inner shaft 20 will be described. When a current is supplied to the electromagnetic coil 42 of the electromagnetic clutch device 40, a looped magnetic circuit, which circularly extends from the electromagnetic coil 42 as a starting point through the yoke 41, the rear housing 12, and the armature 43, is formed.

When the magnetic circuit is formed in this way, the armature 43 is attracted toward the yoke 41, that is, to the rear side in the axial direction. As a result, the armature 43 presses the pilot clutches 44, and the inner pilot clutch plate 44a and the outer pilot clutch plates 44b frictionally engage with each other. Then, the rotational torque of the outer case 10 is transmitted to the support cam member 51 via the pilot clutches 44 and thus the support cam member 51 rotates.

Since the movable cam member 52 is spline-fitted to the inner shaft 20, the movable cam member 52 rotates together with the inner shaft 20. Therefore, a rotation difference occurs between the support cam member 51 and the movable cam member 52. Then, the movable cam member 52 moves in the axial direction (toward the vehicle front side) relative to the support cam member 51 by the operations of the cam followers 53 and the cam grooves. Accordingly, the movable cam member 52 presses the main clutch 30 toward the vehicle front side.

As a result, the inner main clutch plate 32 and the outer main clutch plate 31 contact each other and are brought into a frictional engagement state. Then, the rotation torque of the outer case 10 is transmitted to the inner shaft 20 via the main clutch 30. Then, the rotation difference between the outer case 10 and the inner shaft 20 can be reduced. By controlling the amount of current supplied to the electromagnetic coil 42, it is possible to control the frictional engagement force of the main clutch 30. That is, by controlling the amount of current supplied to the electromagnetic coil 42, it is possible to control the torque transmitted between the outer case 10 and the inner shaft 20.

A sliding member includes a base material portion (110) formed of steel; a nitrogen diffusion layer (120) with a thickness of 10 µm to 50 µm; and a nitrogen compound layer (130) with a thickness of 10 µm to 50 µm. The nitrogen compound layer (130) and the nitrogen diffusion layer (120) are formed by performing a first heating process of performing heat treatment on a material formed of steel in an ammonia atmosphere at a temperature of 570°C to 660°C, a second heating process of performing heat treatment on the material in a non-oxidizing and non-ammonia atmosphere at a temperature of 660°C to 690°C, the temperature in the second heating process being higher than the temperature in the first heating process, and an oil cooling process of performing oil cooling treatment at an oil temperature of 60°C to 80°C subsequently to the second heating process.

## Claims

1. A method of producing a sliding member including a base material portion (110) that is formed of steel, a nitrogen diffusion layer (120) that is formed to have a thickness of 10 µm to 50 µm on a surface side of the base material portion (110), and a nitrogen compound layer (130) that is formed to have a thickness of 10 µm to 50 µm on a surface side of the nitrogen diffusion layer (120), and that constitutes an outermost surface,
the method being **characterized in that**
the nitrogen compound layer (130) and the nitrogen diffusion layer (120) are formed by performing
a first heating process of performing heat treatment on a material formed of steel in an ammonia atmosphere at a temperature of 570°C to 660°C,
a second heating process of performing heat treatment on the material in a non-oxidizing and non-ammonia atmosphere at a temperature of 660°C to 690°C subsequently to the first heating process, the temperature in the second heating process being higher than the temperature in the first heating process and being sufficiently higher than 590°C which is the A1 transformation point of Fe-N,
an oil cooling process of performing oil cooling treatment at an oil temperature of 60°C to 80°C immediately after the second heating process, and
a tempering process of performing tempering treatment at a temperature of 250°C to 400°C while pressurizing a surface side of the material, subsequently to the oil cooling process.

2. The method of producing a sliding member according to claim 1, wherein the temperature of the atmosphere in the first heating process is equal to or higher than 590°C.

3. The method of producing a sliding member according to claim 1 or 2, wherein the oil cooling process is performed in a non-oxidizing atmosphere.

4. The method of producing a sliding member according to any one of claims 1 to 3, wherein a heat treatment time in the second heating process is set to be shorter than a heat treatment time at the temperature of 570°C to 660°C in the first heating process.

5. The method of producing a sliding member according to any one of claims 1 to 4, wherein the ammonia atmosphere is maintained while temperature raising is performed from the temperature at which the heat treatment is performed in the first heating process to the temperature at which the heat treatment is performed in the second heating process.

6. The method of producing a sliding member according to any one of claims 1 to 5, wherein the ammonia atmosphere is created at an atmosphere temperature of 500°C to 550°C immediately before the first heating process, and then temperature raising is performed from the atmosphere temperature of 500°C to 550°C to the temperature at which the heat treatment is performed in the first heating process.

7. The method of producing a sliding member according to any one of claims 1 to 6, wherein oxidation treatment is performed in an oxidizing atmosphere at a temperature of 300°C to 450°C, before the first heating process is performed.

8. The method of producing a sliding member according to claim 7, wherein hot pressing treatment is performed before the oxidation treatment is performed, and in the hot pressing treatment, a pressurizing force of 5 N or more is applied to the material at a temperature of 600°C to 700°C.

9. A method of producing a clutch plate constituting an electromagnetic clutch, **characterized by** comprising:
the method of producing a sliding member according to any one of claims 1 to 8.

## Patentansprüche

1. Verfahren zum Herstellen eines Gleitbauteils mit einem Basismaterialabschnitt (110), der aus Stahl ausgebildet ist, einer Stickstoffdiffusionsschicht (120), die auf einer Flächenseite des Basismaterialabschnitts (110) ausgebildet ist, um eine Dicke von 10 µm bis 50 µm zu haben, und einer Stickstoffverbundschicht (130), die auf einer Flächenseite der Stickstoffdiffusionsschicht (120) ausgebildet ist, um eine Dicke von 10 µm bis 50 µm zu haben, und die eine äußerste Fläche bildet,
wobei das Verfahren **dadurch gekennzeichnet ist, dass**
die Stickstoffverbundschicht (130) und die Stickstoffdiffusionsschicht (120) durch ein Durchführen von Folgendem ausgebildet werden
einen ersten Erwärmungsprozess eines Durchführens einer Wärmebehandlung an einem Material, das aus Stahl ausgebildet ist, in einer Ammoniakatmosphäre bei einer Temperatur von 570°C bis 660°C,
einen zweiten Erwärmungsprozess eines Durchführens einer Wärmebehandlung an dem Material in einer Nichtoxidations- und Nichtammoniakatmosphäre bei einer Temperatur von 660°C bis 690°C nachfolgend dem ersten Erwärmungsprozess, wobei die Temperatur in dem zweiten Erwärmungsprozess höher als die Temperatur in dem ersten Erwärmungsprozess ist und ausreichend höher als 590°C ist, was der A1-Transformationspunkt von Fe-N ist,
einen Ölkühlprozess eines Durchführens einer Ölkühlbehandlung bei einer Öltemperatur von 60°C bis 80°C unmittelbar nach dem zweiten Erwärmungsprozess, und
einen Anlassprozess eines Durchführens einer Anlassbehandlung bei einer Temperatur von 250°C bis 400°C, während eine Seitenfläche des Materials mit Druck beaufschlagt wird, nachfolgend zu dem Ölkühlprozess.

2. Verfahren eines Herstellens eines Gleitbauteils nach Anspruch 1, wobei die Temperatur der Atmosphäre in dem ersten Erwärmungsprozess gleich wie oder höher als 590°C ist.

3. Verfahren eines Herstellens eines Gleitbauteils nach Anspruch 1 oder 2, wobei der Ölkühlprozess in einer Nichtoxidationsatmosphäre durchgeführt wird.

4. Verfahren eines Herstellens eines Gleitbauteils nach einem von Ansprüchen 1 bis 3, wobei eine Wärmebehandlungszeit in dem zweiten Erwärmungsprozess eingestellt ist, um kürzer als eine Wärmebehandlungszeit bei der Temperatur von 570°C bis 660°C in dem ersten Erwärmungsprozess zu sein.

5. Verfahren eines Herstellens eines Gleitbauteils nach einem von Ansprüchen 1 bis 4, wobei die Ammoniakatmosphäre beibehalten wird, während ein Temperaturanstieg von der Temperatur aus, bei der die Wärmebehandlung in dem ersten Erwärmungsprozess durchgeführt wird, zu der Temperatur durchgeführt wird, bei der die Wärmebehandlung in dem zweiten Erwärmungsprozess durchgeführt wird.

6. Verfahren eines Herstellens eines Gleitbauteils nach einem von Ansprüchen 1 bis 5, wobei die Ammoniakatmosphäre bei einer Atmosphärentemperatur von 500°C bis 550°C unmittelbar vor dem ersten Erwärmungsprozess erzeugt wird und dann ein Temperaturanstieg von der Atmosphärentemperatur von 500°C bis 550°C zu der Temperatur durchgeführt wird, bei der die Wärmebehandlung in dem ersten Erwärmungsprozess durchgeführt wird.

7. Verfahren eines Herstellens eines Gleitbauteils nach einem von Ansprüchen 1 bis 6, wobei eine Oxidationsbehandlung in einer Oxidationsatmosphäre bei einer Temperatur von 300°C bis 450°C durchgeführt wird, bevor der erste Erwärmungsprozess durchgeführt wird.

8. Verfahren eines Herstellens eines Gleitbauteils nach Anspruch 7, wobei eine Warmpressbehandlung durchgeführt wird, bevor die Oxidationsbehandlung durchgeführt wird, und in der Warmpressbehandlung eine Druckbeaufschlagungskraft von 5 N oder mehr auf das Material bei einer Temperatur von 600°C bis 700°C aufgebracht wird.

9. Verfahren eines Herstellens einer Kupplungsplatte, die eine elektromagnetische Kupplung bildet, **gekennzeichnet durch**:
das Verfahren eines Herstellens eines Gleitbauteils nach einem von Ansprüchen 1 bis 8.

## Revendications

1. Procédé pour produire un élément coulissant comprenant une partie de matériau de base (110) qui est formée d'acier, une couche de diffusion d'azote (120) qui est formée de manière à avoir une épaisseur de 10 µm à 50 µm sur un côté de surface de la partie de matériau de base (110), et une couche de composé azoté (130) qui est formée de manière à avoir une épaisseur de 10 µm à 50 µm sur un côté de surface de la couche de diffusion d'azote (120), et qui constitue une surface extérieure,
le procédé étant **caractérisé en ce que**
la couche de composé azoté (130) et la couche de diffusion d'azote (120) sont formées par mise en oeuvre
d'un premier traitement de chauffage consistant à mettre en oeuvre un traitement à la chaleur sur un matériau formé d'acier dans une atmosphère d'ammoniac à une température de 570 °C à 660 °C,
d'un deuxième traitement de chauffage consistant à mettre en oeuvre un traitement à la chaleur sur le matériau dans une atmosphère non oxydante et sans ammoniac à une température de 660 °C à 690 °C après le premier traitement de chauffage, la température dans le deuxième traitement de chauffage étant supérieure à la température dans le premier traitement de chauffage et étant suffisamment supérieure à 590 °C, qui est le point de transformation A1 du Fe-N,
d'un traitement de refroidissement dans l'huile consistant à mettre en oeuvre un traitement de refroidissement dans l'huile à une température d'huile de 60 °C à 80 °C immédiatement après le deuxième traitement de chauffage, et
d'un traitement de trempe consistant à mettre en oeuvre un traitement de trempe à une température de 250 °C à 400 °C cependant qu'un côté de surface du matériau est pressurisé, après le traitement de refroidissement dans l'huile.

2. Procédé pour produire un élément coulissant selon la revendication 1, dans lequel la température de l'atmosphère lors du premier traitement de chauffage est égale ou supérieure à 590 °C.

3. Procédé pour produire un élément coulissant selon la revendication 1 ou 2, dans lequel le traitement de refroidissement dans l'huile est mis en oeuvre dans une atmosphère non oxydante.

4. Procédé pour produire un élément coulissant selon l'une quelconque des revendications 1 à 3, dans lequel le temps de traitement à la chaleur lors du deuxième traitement de chauffage est établi de façon à être plus court que le temps de traitement à la chaleur à une température de 570 °C à 660 °C lors du premier traitement de chauffage.

5. Procédé pour produire un élément coulissant selon l'une quelconque des revendications 1 à 4, dans lequel l'atmosphère d'ammoniac est maintenue cependant que l'augmentation de la température est effectuée à partir de la température à laquelle le traitement à la chaleur est mis en oeuvre lors du premier traitement de chauffage jusqu'à la température à laquelle le traitement à la chaleur est mis en oeuvre lors du deuxième traitement de chauffage.

6. Procédé pour produire un élément coulissant selon l'une quelconque des revendications 1 à 5, dans lequel l'atmosphère d'ammoniac est créée à une température de l'atmosphère de 500 °C à 550 °C immédiatement avant le premier traitement de chauffage, et ensuite l'augmentation de la température est effectuée à partir de la température de l'atmosphère, de 500 °C à 550 °C, jusqu'à la température à laquelle le traitement à la chaleur est mis en oeuvre lors du premier traitement de chauffage.

7. Procédé pour produire un élément coulissant selon l'une quelconque des revendications 1 à 6, dans lequel le traitement d'oxydation est mis en oeuvre dans une atmosphère oxydante à une température de 300 °C à 450 °C, avant que le premier traitement de chauffage soit mis en oeuvre.

8. Procédé pour produire un élément coulissant selon la revendication 7, dans lequel un traitement de pressage à chaud est mis en oeuvre avant que le traitement d'oxydation soit mis en oeuvre, et, lors du traitement de pressage à chaud, une force de pressurisation de 5 N ou plus est appliquée au matériau à une température de 600 °C à 700 °C.

9. Procédé pour produire un disque d'embrayage d'un embrayage électromagnétique, **caractérisé en ce qu'**il comprend :
le procédé pour produire un élément coulissant selon l'une quelconque des revendications 1 à 8.
